# EUROPÄISCHE PATENTANMELDUNG

(11) **EP 3 231 645 A1**
(43) Veröffentlichungstag der Anmeldung: **18.10.2017**
(21) Anmeldenummer: 17000600.1
(22) Anmeldetag: 07.04.2017
(51) Int. Cl.: B60H 1/00, B60P 3/20, F25D 11/00, F25D 11/02

(54) **KÜHLBARER NUTZFAHRZEUGAUFBAU**

(30) Priorität: 12.04.2016 DE 102016004312; 18.05.2016 DE 102016006179
(71) Anmelder: Fahrzeugwerk Bernard Krone GmbH & Co. KG, 49757 Werlte (DE)
(72) Erfinder: Sasse, Uwe, 49716 Meppen (DE)
(74) Vertreter: Pott, Ulrich

(57) **Zusammenfassung**

Die Erfindung betrifft einen Kühlbaren Nutzfahrzeugaufbau (1) mit einem von Seitenwänden (2), zumindest einer Stirnwand (4), einem Boden (6), einem Dach (3) sowie von zumindest einer Tür (5) begrenzten Laderaum (7) und mit zumindest einer an dem Nutzfahrzeugaufbau (1) außerhalb des Laderaumes (7) angeordneten Kühlvorrichtung (17, 18, 19), über die der Laderaum (7) temperierbar ist, wobei die Kühlvorrichtung (17, 18, 19) über ein Luftverteilungssystem mit Luftleitungen (14, 15, 16, 26) und in den Laderaum (7) mündenden verschließbaren Lufteinlassöffnungen zur Zuführung von gekühlter Zuluft mit dem Laderaum (7) verbunden ist, wobei Lufteinlassöffnungen innerhalb des Laderaumes (7) verteilt und mit Abstand zueinander angeordnet sind.

## Beschreibung

Die Erfindung bezieht sich auf einen kühlbaren Nutzfahrzeugaufbau mit einem von Seitenwänden, zumindest einer Stirnwand, einem Boden, einem Dach, sowie von zumindest einer Tür begrenzten Laderaum und mit zumindest einer an dem Nutzfahrzeugaufbau außerhalb des Laderaums angeordneten Kühlvorrichtung, über die die Laderaum temperierbar sind.

Nutzfahrzeugaufbauten der vorgenannten Art mit einem temperierbaren Laderaum, der von einer Kühlvorrichtung auch insbesondere kühle Temperaturen zum Transport von beispielsweise Lebensmitteln zu kühlen ist, sind in vielfältiger Ausgestaltung bekannt. Dazu können die Kühlvorrichtungen innerhalb des Laderaumes vorgesehen sein, aber auch außerhalb des Laderaumes.

Herkömmlicherweise haben derartige Kühlvorrichtungen Kühlluftaustritte, die zentral in den Laderaum münden. Dies ist nachteilig, da damit in Nähe der Kühllufteinlassöffnungen innerhalb des Laderaumes zu kühlende Warenladegüter gekühlt werden, aber entfernt von Kühllufteinlassöffnungen entfernter angeordnete Ladegüter nicht mehr hinreichend mit gekühlter Kühlluft versorgt werden können. Das verursacht innerhalb des Laderaumes erhebliche Temperaturunterschiede mit dem Ergebnis, dass vielfach Ladegut aufgrund nicht hinreichender Kühlung nach einem Kühltransport entsorgt werden muss, an anderer Stelle jedoch Ladegüter auf eine Temperatur runtergekühlt worden ist, die für den Transport zu niedrig gewesen ist. Auch das kann zu einem Verderben der Ware während eines Kühltransportes führen.

Darüber hinaus ist es bekannt, kühlbare Nutzfahrzeugaufbauten geschaffen zu haben, die den Laderaum in unterschiedliche Laderaumzonen unterteilen, beispielsweise durch Trennwände, um in den unterschiedlichen Laderaumzonen auch unterschiedliche Temperaturen einstellen zu können. Dazu ist es bekannt, in den jeweiligen Laderaumzonen unterschiedliche Temperatursollwerte einzustellen.

Dazu sind Kühlvorrichtungen erforderlich, die in der Lage sind, unterschiedliche Temperaturzonen bzw. unterschiedliche Temperaturen in verschiedenen Laderaumzonen einstellen zu können.

Herkömmlicherweise wird dazu außerhalb des Laderaums eine Kühlvorrichtung an dem Nutzfahrzeugaufbau angeordnet, mit der die erste Laderaumzone verbunden ist, um die Temperatur in dieser Laderaumzone einzustellen. Die Kühlvorrichtung ist mit einem Zusatzverdampfer in der weiteren Laderaumzone verbunden. Dieser ist mit der Kühlvorrichtung kältetechnisch über eine Saugleitung, eine Flüssigkeitsleitung und eine Heißgasbypassleitung verbunden. Ein derart zusätzlicher Verdampfer wird in einer festen Position innerhalb der Laderaumzone in dem entsprechenden Laderaum montiert. Der Nutzer des Nutzfahrzeugaufbaus ist damit an die Position gebunden und kann die Positionsgröße und den Temperatursollwert der Kühlzone nicht anwendungsbezogen verändern. Des Weiteren ist diese Lösung aufwändig in Anschaffung, in der Installation und in der Inbetriebnahme.

Des Weiteren ist bekannt, eine stirnseitig an den Nutzfahrzeugaufbau montierte zentrale Kondensatoreinheit als Wärmesenke für das Gesamtsystem zu nutzen. Dabei werden Kältemodule, bestehend aus Kältemittel/Wasser-Wärmetauschereinheit, Kompressoreinheit, Verdampfereinheit, in den einzelnen Laderaumzonen installiert. Diese sind fix positioniert und in der Größe nicht der Laderaumzone anzupassen. Die Kältevorrichtung begrenzen die Größe der Laderaumzone.

Diese vorbekannten Lösungen haben den großen Nachteil, dass insbesondere bei geöffneten Türen feuchte Umgebungsluft in den Laderaum eindringen kann, die an den in den Laderaumzonen angeordneten Zusatzverdampfern bzw. an den Kühlaggregaten eine Vereisung verursachen kann, insbesondere, wenn die Laderaumzonen mit Temperaturen unter 0° zu temperieren sind.

Es ist Aufgabe der vorgenannten Erfindung, einen kühlbaren Nutzfahrzeugaufbau zu schaffen, der ohne das Erfordernis eines Verdampfers innerhalb des Laderaumes auskommt und bei dem Ladegut innerhalb des Laderaumes mit einfachen technischen Mitteln auf eine vergleichmäßigte Kühltemperatur zu bringen ist.

Zur Lösung dieser Aufgabe zeichnet sich der kühlbare Nutzfahrzeugaufbau der eingangs genannten Art dadurch aus, dass die Kühlvorrichtung über ein Luftverteilungssystem mit Luftleitungen und in den Laderaum mündenden verschließbaren Lufteinlassöffnungen zur Zuführung von gekühlter Zuluft mit dem Laderaum verbunden ist, wobei Lufteinlassöffnungen innerhalb des Laderaumes verteilt und mit Abstand zueinander angeordnet sind.

Hinsichtlich wesentlicher weiterer Ausgestaltungen wird auf die Ansprüche 2 bis 24 verwiesen.

Insgesamt ist damit ein kühlbarer Nutzfahrzeugaufbau geschaffen, bei dem durch das Luftverteilungssystem mit den Lufteinlassöffnungen an den verschiedenen Stellen des Laderaumes gezielt Kühlluft dort hinzubringen ist, wie es für eine vergleichmäßigte Temperatur innerhalb des Laderaumes benötigt wird. So können auch über das Luftverteilungssystem mit Luftleitungen und dem Kühllufteinlassöffnungen auch Ladegüter zum Beispiel in einem rückwärtigen Bereich des Laderaumes derart wirksam auf die gewünschte Temperatur rückgekühlt werden, genauso wie auch in vorderen oder mittleren Bereichen des Laderaumes. Auch in Quer- oder Längsgassen des Laderaumes, die sich aufgrund der Bestückung des Laderaumes mit Ladegütern ergeben können, können gezielt Lufteinlassöffnungen vorgesehen sein, um darin gekühlte Luft einblasen und zirkulieren lassen zu können, um nach Art von Luftwalzen die Ladegüter wirksam mit Kühlluft zu bestreichen bzw. mit Kühlluft zu kühlen.

Die Luftleitungen und Kühllufteinlassöffnungen, ggf. auch Kühlluftauslassöffnungen können auf konstruktiv verschiedenartige Art und Weise vorgesehen sein. So können die entsprechenden Luftleitungen nach Art von Kühlluftschläuchen als verstellbare Einheiten innerhalb des Laderaumes vorgesehen sein, indem sie beispielsweise an Portalen, die zieharmonikaartig oder teleskopartig ausgestaltet sind, von einer Bedienperson an eine solche Stelle zu bringen ist, an den für den speziellen Transport gekühlte Luft in das Innere des Laderaumes an der jeweils benötigten Stelle eingebracht werden soll.

Besonders bevorzugt wird aber, wenn innerhalb von Stirnwänden und/oder Seitenwänden unter Einschluss von Seitenplanen, rückwärtigen Türen, im Laderaumboden und/oder im Laderaumdach, unter Einschluss von Hubdächern und/oder Dachplanen Teile des Luftverteilungssystems integriert sind. Dazu können Lufteinlassöffnungen und/oder Luftauslassöffnungen vorgesehen sein, die Schieber oder sonstige Verstellmittel hinsichtlich ihrer Auslassquerschnitte veränderbar sind. Des Weiteren können innerhalb des Luftverteilungssystems Bypassleitungen vorgesehen sein, Ventile und Schieber, und insbesondere natürlich auch Regel- und Steuerorgane, um die Kühlluft insgesamt dort in den Laderaum einbringen zu können, wo diese benötigt wird. Darüber hinaus ist es auch möglich, z.B. Luftauslassöffnungen vorzusehen, die Abluft aus dem Laderaum wieder zu der Kühlvorrichtung zurückführen, um diese dann nach erneuter Kühlung wieder den Lufteinlassöffnungen zuzuführen. Ebenfalls ist es möglich, Luftauslassöffnungen im Nutzfahrzeugaufbau vorzusehen, um Abluft aus dem Laderauminneren in die Umgebung abzuführen, so dass sich entsprechende Luftleitungen zur Rückführung von Kühlluft einsparen lassen.

Insgesamt ist da ein kühlbarer Nutzfahrzeugaufbau geschaffen, bei dem mit der anzuordnenden zumindest einen Kühlvorrichtung, bevorzugt werden zwei oder mehrere Kühlvorrichtungen, die jeweils einzelnen Laderaumzonen zugeordnet sind, über das Luftverteilungssystem mit den entsprechenden Lufteinlässen und Luftauslässen jede Laderaumzone individuell auf die jeweilige Temperatur, die dort vorgehalten werden soll, ohne das Erfordernis eines Zusatzverdampfers in den jeweiligen Laderaumzonen, einzustellen ist.

Der Aufwand für die Installation kann werksmäßig bei dem Nutzfahrzeugaufbau vorgesehen werden und beschränkt sich auf die Luftleitungen, die Ein- und Auslässe und Vorrichtungen und/oder Ventile, Schieber und dgl. Mittel, um Lufteinlässe und/oder Luftauslässe zu steuern. Das Luftleitungssystem kann so gestaltet sein, dass unterschiedliche Lufteinlässe und Luftauslässe miteinander zu koppeln sind, um variationsreich Laderaumzonen bei einer Verstellung von Trennwänden, sei es, dass sie quer zur Fahrzeuglängsrichtung ausgerichtet sind oder parallel zur Fahrzeuglängsrichtung angeordnet werden sollen, zu kühlen. So können verschiedene Luftleitungen so gestaltet sein, dass verschiedene Lufteinlässe und Luftauslässe miteinander zu koppeln sind, zu Gruppen zusammengefasst werden, und zwar auch zu verschiedenen Gruppen, um dann einer Kühlvorrichtung zugeordnet zu werden. Eben-falls ist es möglich, verschiedene Sensoren und Empfänger innerhalb des Laderaumes anzuordnen, um automatisch eingestellte Laderaumzonen zu erfassen und über eine Steuervorrichtung bestimmte Lufteinlässe und -auslässe mit der jeweils zuzuordnenden Kühlvorrichtung zu verbinden.

In besonders einfacher Weise ist es ebenfalls möglich, über das Luftleitungssystem gekühlte Luft ganz gezielt in dem Heckbereich des Nutzfahrzeugaufbaus, oder, falls an anderer Stelle des Nutzfahrzeugaufbaus Türen vorhanden sein sollten, dort einen Vorhang aus gekühlter Luft zu erzeugen, der von oben nach unten fällt und feuchte Umgebungsluft daran hindert, in den gekühlten Laderaum einzudringen.

Weitere vorteilhafte Ausgestaltungen der Erfindung ergeben sich aus weiteren Unteransprüchen, der nachfolgenden Beschreibung und der Zeichnung. In
- Fig. 1: zeigt teilweise ausgeschnitten ein Ausführungsbeispiel eines kühlbaren Nutzfahrzeugaufbaus mit schematischer Veranschaulichung einer Kühlluftführung mit insgesamt drei Laderaumzonen und zwei quer zur Fahrzeuglängsrichtung angeordneten Trennwänden;
- Fig. 2: eine zu Fig. 1 analoge Darstellung ebenfalls mit drei Laderaumzonen, jedoch mit zwei parallel zur Fahrzeuglängsrichtung vorgesehenen Trennwänden;
- Fig. 3: ein alternatives Ausführungsbeispiels mit insgesamt drei Laderaumzonen und drei außerhalb des Laderaums vorgesehenen Kühlvorrichtungen, die jeweils einzelnen Laderaumzonen ohne Verbindung untereinander zugeordnet sind,
- Fig. 4 u. 5: auch jeweils separate alternative Ausführungsbeispiele, auch jeweils mit drei Laderaumzonen und drei Kühlvorrichtungen, wobei zwei Kühlvor-richtungen über Verbindungsleitungen miteinander verbunden sind, einmal mit einer zentralen Abluftleitung (Fig. 4) und einem mit drei separaten Abluftleitungen (Fig. 5), und
- Fig. 6: ein Ausführungsbeispiel mit drei Kühlvorrichtungen bei dem veranschaulicht ist, dass über eine Kühlvorrichtung ein Kühlluftvorhang im Heckbereich des Fahrzeuges im Bereich zu öffnender Hecktüren erzeugt werden kann.

In der Zeichnung sind übereinstimmende Teile mit übereinstimmenden Bezugsziffern versehen.

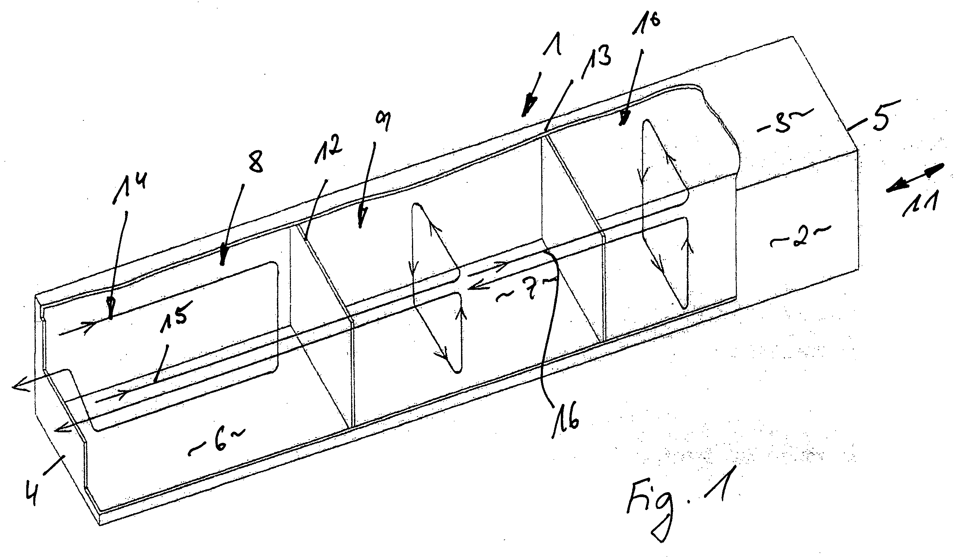

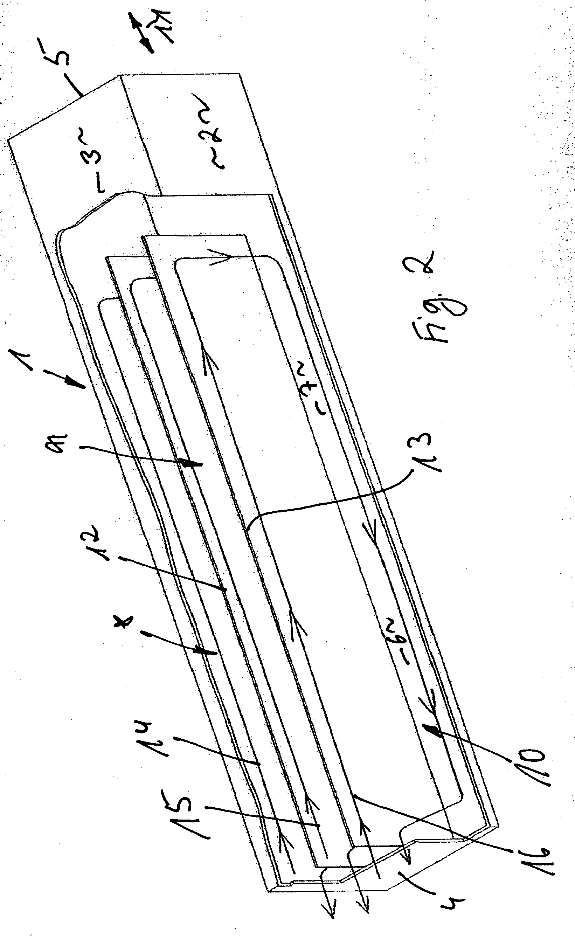

Fig. 1 zeigt in einer schematischen Darstellung ein Ausführungsbeispiel eines kühlbaren Nutzfahrzeugaufbaus mit Seitenwänden 2, einem Dach 3, einer Stirnwand 4, einem Heck 5, das beispielsweise zwei Heckflügeltüren aufweist, einem Boden 6, so dass im Inneren des Nutzfahrzeugaufbaus insgesamt ein Laderaum 7 ausgebildet ist mit Laderaumzonen 8, 9 und 10, die durch quer zur Fahrzeuglängsrichtung 11 ausgerichtete Trennwände 12 und 13 geschaffen sind. Von einer in den Fig. 1 und 2 nicht dargestellten Kühlvorrichtung gelangt ein Kühlluftstrom 14 in den Laderaum 7 und wird nach Verlassen der Laderaumzone 8 wieder zurückgeführt. Ein zweiter Kühlluftstrom 15 wird der mittleren Laderaumzone 9 zugeführt und verlässt dann auch wiederum diese Laderaumzone und wird der Kühlvorrichtung zugeführt. Ein dritter Kühlluftstrom 16 kommt auch von der Kühlvorrichtung und wird auch wieder zu dieser zugeführt. In dem Ausführungsbeispiel nach Fig. 2 ist alles analog ausgeführt. Hier sind jedoch die Trennwände 12 und 13 parallel zur Fahrzeuglängsrichtung 11 ausgerichtet, so dass sich ebenfalls Laderaumzonen 8, 9 und 10 ergeben, die parallel zur Fahrzeuglängsrichtung ausgebildet sind. Auch hier sind Kühlluftströme 14, 15 und 16 dargestellt, die von insgesamt drei an der Stirnwand 4 außerhalb der Laderaumzonen 8, 9 und 10 angeordneten Kühlvorrichtungen kommen, wobei die Kühlluft diesen Kühlvorrichtungen wieder zugeführt wird. Es ist ersichtlich, dass innerhalb der Laderaumzonen 8, 9 und 10 keinerlei Zusatzverdampfer benötigt werden.

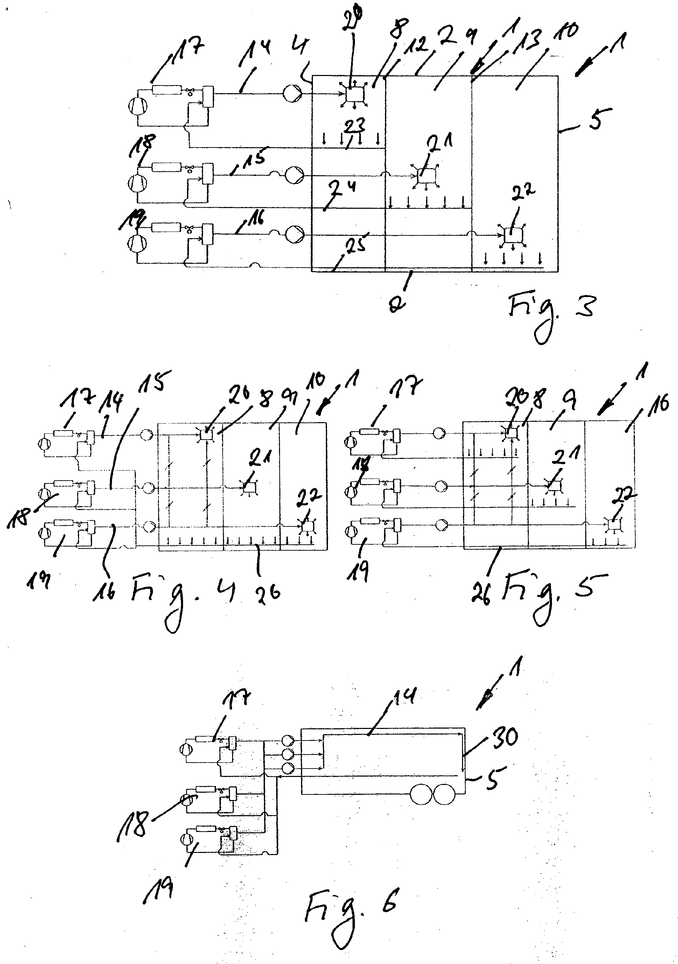

Aus der Darstellung nach Fig. 3 ist wiederum der kühlbare Nutzfahrzeugaufbau 1 ersichtlich mit seinen Seitenwänden 2, der Heckpartie 5, der Stirnwandung 4, den Laderaumzonen 8, 9 und 10 und den Trennwänden 12 und 13. Es sind insgesamt drei Kühlvorrichtungen 17, 18 und 19 vorgesehen. In diese Kühlvorrichtungen 15, 16 und 17 sind die Verdampfer integriert ebenfalls Bypassleitungen und Kompressoren. Die Kühlluft wird über das Luftverteilungssystem zu zentralen Luftauslässen 20, 21 und 22 in den jeweiligen Laderaumzonen 8, 9 bzw. 10 geführt und wird über jeweils selbständige Leitungen 23, 24, 25 wieder zu den jeweiligen Kühlvorrichtungen 17, 18 bzw. 19 zurückgeführt.

Die Ausführungsbeispiele nach den Fig. 4 und 5 sind analog ausgebildet, jedoch sind hier die Leitungen 14 und 15 und 16 und 14 miteinander verbunden (Fig. 4), die von einem Steuerventil beherrscht werden.

Das ansonsten analog ausgeführte Ausführungsbeispiel nach Fig. 5 hat die Variante, dass die Leitungen 14 und 16 und 16 und 14 miteinander verbunden sind. Des Weiteren wird bei dem Ausführungsbeispiel nach Fig. 6 eine Abluftleitung 26 zentral aus allen drei Laderaumzonen 8, 9, 10 zurückgeführt und zwar führen diese alle zu den drei Kühlvorrichtungen 17, 18 und 19. Hierbei führen die Abluftleitungen auch jeweils zu dem zugeordneten Kühlvorrichtungen 17, 18 und 19 zurück. In dem Ausführungsbeispiel nach Fig. 6 ist dargestellt, wie von dem Kühlaggregat 17 bei 30 im Heckbereich ein Vorhang aus gekühlter Luft erzeugt werden kann, indem die durch die Leitung 14 zugeführte gekühlte Luft bis zum Heck 5 des Fahrzeuges geführt wird, wo dieser Vorhang aus gekühlter Luft nach unten fällt.

## Patentansprüche

1. Kühlbarer Nutzfahrzeugaufbau (1) mit einem von Seitenwänden (2), zumindest einer Stirnwand (4), einem Boden (6), einem Dach (3) sowie von zumindest einer Tür begrenzten Laderaum (7) und mit zumindest einer an dem Nutzfahrzeugaufbau (1) außerhalb des Laderaumes (7) angeordneten Kühlvorrichtung (17, 18, 19), über die der Laderaum (7) temperierbar ist, **dadurch gekennzeichnet, dass** die Kühlvorrichtung über ein Luftverteilungssystem mit Luftleitungen (14, 15, 16, 26) und in den Laderaum (7) mündenden verschließbaren Lufteinlassöffnungen zur Zuführung von gekühlter Zuluft mit dem Laderaum (7) verbunden ist, wobei Lufteinlassöffnungen innerhalb des Laderaumes verteilt und mit Abstand zueinander angeordnet sind.

2. Kühlbarer Nutzfahrzeugaufbau (1) nach Anspruch 1, **dadurch gekennzeichnet, dass** die Lufteinlassöffnungen lageveränderlich in dem Laderaum (7) angeordnet sind.

3. Kühlbarer Nutzfahrzeugaufbau nach Anspruch 1 oder 2, **dadurch gekennzeichnet, dass** die Lufteinlassöffnungen an verstellbaren Haltevorrichtungen angeordnet sind.

4. Kühlbarer Nutzfahrzeugaufbau nach Anspruch 3, **dadurch gekennzeichnet, dass** eine Haltevorrichtung zieharmonikaartig oder teleskopierbar ausgebildet ist.

5. Kühlbarer Nutzfahrzeugaufbau nach einem der Ansprüche 1 bis 4, **dadurch gekennzeichnet, dass** die Luftleitungen als flexible Luftschläuche ausgebildet sind.

6. Kühlbarer Nutzfahrzeugaufbau nach einem der Ansprüche 1 bis 5, **dadurch gekennzeichnet, dass** in den Seitenwänden (2),in der zumindest eine Stirnwand (4), in dem Dach (3) und/oder in dem Boden (6) des Nutzfahrzeugaufbaus Luftleitungen und/oder Lufteinlassöffnungen und/oder Luftauslassöffnungen integriert sind.

7. Kühlbarer Nutzfahrzeugaufbau nach einem der Ansprüche 1 bis 6, **dadurch gekennzeichnet, dass** über die Luftauslassöffnungen und Luftleitungen Abluft aus dem Laderaum zur Kühlvorrichtung zurückführbar ist.

8. Kühlbarer Nutzfahrzeugaufbau nach einem der Ansprüche 1 bis 7, **dadurch gekennzeichnet, dass** Ablauf aus dem Laderaum über Luftauslassöffnungen in die Umgebung abführbar ist.

9. Kühlbarer Nutzfahrzeugaufbau nach einem der Ansprüche 1 bis 8, **dadurch gekennzeichnet, dass** über zumindest eine Trennwand (12, 13) in Laderaumzonen (8, 9, 10) unterteilbar ist und über das Luftverteilungssystem mit den Luftleitungen und Lufteinlassöffnungen die Laderaumzonen (8, 9, 10) unabhängig voneinander von Kühlvorrichtung mit Kühlluft beaufschlagbar sind.

10. Kühlbarer Nutzfahrzeugaufbau (1) nach Anspruch 9, **dadurch gekennzeichnet, dass** jede Laderaumzone (8, 9, 10) frei von einem Zusatzverdampfer ausgebildet ist und ein Zusatzverdampfer in der außerhalb des Laderaums (7) angeordneten Kühlvorrichtung (17, 18, 19) vorgesehen ist.

11. Kühlbarer Nutzfahrzeugaufbau (1) nach einem der Ansprüche 1 bis 10, **dadurch gekennzeichnet, dass** Lufteinlassöffnungen und/oder Luftauslassöffnungen über Steuerungselemente zu verschließen und/oder zu öffnen sind und/oder Lufteinlass- oder Luftauslassquerschnitte veränderbar und einstellbar ist.

12. Kühlbarer Nutzfahrzeugaufbau (1) nach einem der Ansprüche 9 bis 11, **dadurch gekennzeichnet, dass** Positionssensoren vorgesehen sind zur Ermittlung der Position einer Trennwand (12, 13) und mit den Signalen der Positionssensoren über Empfangs-einheiten die Größe einer Laderaumzone (8, 9, 10) ermittelbar ist wobei über eine Steuerungsvorrichtung Lufteinlassöffnungen und Luftauslassöffnungen in Abhängigkeit einer vorgebbaren Kühltemperatur regelbar sind.

13. Kühlbarer Nutzfahrzeugaufbau (1) nach einem der Ansprüche 9 bis 12, **dadurch gekennzeichnet, dass** sich in Nutzfahrzeugaufbaulängsrichtung (11) mit Abstand zu-einander vorgesehen Lufteinlass- und Luftauslassöffnungen vorgesehen sind, die an das Luftverteilsystem und eine Kühlvorrichtung (17, 18, 19) anschließbar sind, wobei die Trennwände (12, 13) zur Erstellung unterschiedlicher Laderaumzonen (8, 9, 10) verstellbar innerhalb des Laderaums (7) angeordnet sind und einzelne Lufteinlass- und Luftauslassöffnungen entsprechend der eingestellten Laderaumzonen (8, 9, 10) miteinander koppelbar sind als Einheit, die einer bestimmten Laderaumzone (8, 9, 10) zugeordnet sind.

14. Kühlbarer Nutzfahrzeugaufbau (1) nach einem der Ansprüche 9 bis 13, **dadurch gekennzeichnet, dass** sich die Trennwände (12, 13) in Fahrzeuglängsrichtung (11) erstrecken und parallel zueinander angeordnet sind.

15. Kühlbarer Nutzfahrzeugaufbau (1) nach einem der Ansprüche 9 bis 14, **dadurch gekennzeichnet, dass** die Trennwände (12, 13) quer zur Fahrzeuglängsrichtung (11) aber parallel zueinander ausgerichtet sind.

16. Kühlbarer Nutzfahrzeugaufbau (1) nach einem der Ansprüche 9 bis 15, **dadurch gekennzeichnet, dass** zumindest eine Trennwand (12, 13) sich quer zur Nutzfahrzeugaufbaulängsrichtung (11) und zumindest eine Querwand (12, 13) sich koaxial oder parallel zur Nutzfahrzeugaufbaulängsrichtung (11) erstreckt.

17. Kühlbarer Nutzfahrzeugaufbau (1) nach einem der Ansprüche 1 bis 16, **dadurch gekennzeichnet, dass** zwei oder mehrere Kühlvorrichtungen (17, 18, 19) außerhalb des Laderaums (7) an dem Nutzfahrzeugaufbau (1) vorgesehen sind.

18. Kühlbarer Nutzfahrzeugaufbau (1) nach Anspruch 17, **dadurch gekennzeichnet, dass** jeder Laderaumzone (8, 9, 10) eine separate Kühlvorrichtung (17, 18, 19) zugeordnet ist.

19. Kühlbarer Nutzfahrzeugaufbau (1) nach Anspruch 18, **dadurch gekennzeichnet, dass** jede Kühlvorrichtung (17, 18, 19) ein eigenes Luftverteilungssystem mit Luftleitungen und Lufteinlass- und Luftauslassöffnungen verfügt.

20. Kühlbarer Nutzfahrzeugaufbau (1) nach Anspruch 19, **dadurch gekennzeichnet, dass** ein Luftverteilungssystem einer Kühlvorrichtung (17, 18, 19) mit dem Luftverteilungssystem einer anderen Kühlvorrichtung (17, 18, 19) über Verbindungsleitungen innerhalb einer Laderaumzone (8, 9, 10) verbindbar ist.

21. Kühlbarer Nutzfahrzeugaufbau (1) nach Anspruch 20, **dadurch gekennzeichnet, dass** die Verbindungsleitungen über Ventileinheiten zu öffnen, zu schließen und von ihrem Durchströmquerschnitt veränderbar sind.

22. Kühlbarer Nutzfahrzeugaufbau (1) nach einem der Ansprüche 17 bis 21, **dadurch gekennzeichnet, dass** dem Luftleistungssystem aller Kühlvorrichtungen (17, 18, 19) eine gemeinsame Abluftleitung (26) zugeordnet ist, die mit sämtlichen Kühlvorrichtungen (17,18,19) in Verbindung steht und sich über sämtliche Laderaumzonen (8, 9, 10) erstreckt.

23. Kühlbarer Nutzfahrzeugaufbau (1) nach einem der Ansprüche 17 bis 22, **dadurch gekennzeichnet, dass** das Luftleitungssystem jeder Kühlvorrichtung (17, 18, 19) eine eigene Abluftleitung für die jeweils der Kühlvorrichtung (17, 18, 19) aggregat zugeordnete Laderaumzone (8, 9, 10) aufweist.

24. Kühlbarer Nutzfahrzeugaufbau (1) nach einem der Ansprüche 12 bis 23, **dadurch gekennzeichnet, dass** über eine Kühlvorrichtung (17, 18, 19) eine Zuluftleitung (14) bis an eine hintere Hecktür (5) des Nutzfahrzeugaufbaus (1) geführt ist und über die ein heckseitiger Vorhang aus gekühlter Luft entlang der Hecköffnung (5) des Laderaums (7) des Nutzfahrzeugaufbaus (1) geführt wird.
